# EUROPÄISCHE PATENTSCHRIFT

(11) **EP 1 950 386 B1**
(45) Veröffentlichungstag und Bekanntmachung des Hinweises auf die Patenterteilung: **08.12.2010**
(21) Anmeldenummer: 08001260.2
(22) Anmeldetag: 24.01.2008
(51) Int. Cl.: F01N 3/20, F01N 9/00

(54) **Kalibrierte Dosiereinheit, insbesondere einer Abgasnachbehandlungseinheit**
Calibrated metering unit, in particular for an exhaust gas treatment unit
Unité de dosage calibrée, en particulier d'une unité de post-traitement de gaz d'échappement

(30) Priorität: 25.01.2007 DE 102007004687
(43) Veröffentlichungstag der Anmeldung: 30.07.2008
(73) Patentinhaber: Hydraulik-Ring GmbH, 97828 Marktheidenfeld (DE)
(72) Erfinder: Zapf, Friedrich, Dipl.-Ing., 97753 Karlstadt (DE); Stegmann, Heico, Dipl.-Ing., 97082 Würzburg (DE); Pelz, Thorsten, 97277 Neubrunn (DE)

(56) Entgegenhaltungen:
- WO-A-02/27280
- WO-A-02/50497
- DE-A1- 10 359 522
- DE-A1-102005 030 421

## Beschreibung

Die Erfindung bezieht sich auf eine Volumensmengenabgabeeinheit mit den Merkmalen des Oberbegriffes des Anspruches 1, Weiterhin bezieht sich die Erfindung auf die Angabe von Verfahren zur Einstellung bzw. Kallbrierung der Druckausgangssignal-Volumensmenge-Charakteristik einer in einer Abgasnachbehandlungseinheit verwendbaren Volumensmengenabgabeeinheit.

Im Sinne der vorliegenden Erfindung wird der Begriff "Kalibrieren" abweichend von der Verwendung in der klassischen Messtechnik benutzt. In der klassischen Messtechnik versteht man unter Kalibrieren die Anpassung eines Wertes an einen gegebenen Normwert und den Versuch eine möglichst geringe Abweichung zwischen beiden Werten, dem Normwert und dem Kalibrierwert, herzustellen.

Vorliegend wird von einer Volumensmengenabgabeeinheit gesprochen. Es sind Regelkonzepte bekannt, die statt der Volumensmengenabgabe die Massenmenge überwachen und/oder messen und/oder mit Hilfe des Wertes regeln. Weil eine direkte physikalische Abhängigkeit, z. B. über die Temperatur, die Dichte und die Viskosität, zwischen der Volumensmenge und der Massenmenge gegeben ist, wird der eine Begriff substitutiv für den anderen Begriff verwendet.

Die Abgase moderner Verbrennungsmotoren enthalten Schadstoffe wie beispielsweise Stickoxide. Auf dem Gebiet der Abgasriachbehandlung bei Verbrennungsmotoren, insbesondere bei mager betriebenen Dieselmotoren, ist die Harnstoff-SCR-Technik die derzeit effizienteste Art der Stickoxid-Reduktion (SCR steht für Selective Catalytic Reduction). Bei einer Variante der Harnstoff-SCR-Technik wird eine flüssige Harnstoff-Wasser-Lösung an einer geeigneten Stelle vor dem SCR-Abgaskatalysator direkt über eine Dosiervorrichtung mit einer Injektorvorrichtung, beispielsweise einer Feinzerstäuberdüse, in den Abgasstrom des Verbrennungsmotors eindosiert. Bei einer anderen Variante wird ein Harnstoff-Wasser-Aerosol eindosiert. Im SCR-Abgaskatalysator werden die Stickoxide sodann bekanntlich durch den aus der Harnstoff-Wasser-Lösung bzw. dem Harnstoff-Wasser-Aerosol abgespaltenen Ammoniak in elementaren Stickstoff und Wasserdampf umgewandelt (Thermolyse und Hydrolyse).

### Stand der Technik

Die DE 10 2005 030 421 A1 beschreibt ein Dosiersystem zur dosierten Abgabe eines flüssigen Zusatzstoffes in eine Abgasleitung einer Brennkraftmaschine und ein Verfahren zum Betreiben eines Dosiersystems zur dosierten Abgabe eines flüssigen Zusatzstoffes in eine Abgasleitung einer Brennkraftmaschine. Eine Öffnungszeitdauer des Dosierventils kann zur Zumessung der Dosiermenge gemäss einer dem Dosiersteuergerät zur Verfügung stehenden Dosierkennlinie für den Zusatzstoffdurchsatz durch das geöffnete Dosierventil in Abhängigkeit von einem Druckwert vor und/oder nach dem Dosierventil vom Dosiersteuergerät bestimmt werden.

Aus der W0 02/50497 A2 ist eine Sensorvorrichtung bekannt, wobei ein Gerät und ein Verfahren zur Kalibrierung von Niederdrucksensoren beschrieben werden. Die Sensorvorrichtung umfasst einen Sensor, der ein Ausgangssignal auf Basis einer Messung erzeugen kann, und einen Schaltkreis, der mit dem Sensor verbunden ist. Der Schaltkreis ist programmierbar und kann ein vorbestimmbares Ausgangssignal zu einem an den Schaltkreis angelegten Eingangssignal erzeugen.

Die DE 103 59 522 A1 beschreibt ein Reduktionsmitteldosiersystem für ein Kraftfahrzeug. Der Innendruck eines Luftvolumens wird über einen Trennkörper auf ein Reduktionsmittelvolumen übertragen.

Die W0 02/27280 A2 offenbart ein Verfahren und eine Vorrichtung zum Bestimmen des Füllstandes einer Flüssigkeit in einem Behälter, insbesondere für ein in einem Behälter gespeichertes und in einem Kraftfahrzeug mitgeführtes Reduktionsmittel zur Abgasnachbehandlung bei einer Brennkraftmaschine. - Der elektrische Widerstand zwischen einer Füllstandselektrode und einer Bezugselektrode und der elektrische Widerstand zwischen einer Referenzelektrode und der Bezugselektrode werden punktuell ermittelt. Der jeweilige Wert für den elektrischen Widerstand ändert sich signifikant, wenn mindestens ein vorgegebener Grenzwert für den Füllstand unter- oder überschritten wird.

DE 199 47 198 A1 und DE 100 47 516 A1 zeigen zwei Abgasnachbehandlungseinheiten auf Hamstoff-Wasser-Lösungsbasis. In dem jeweiligen System sind wenigstens zwei einstellbare Drucksensoren eingezeichnet. Es wird der Druckwert möglichst exakt aufgenommen und an eine elektronische Steuerungseinheit, in der ein Regler realisiert sein kann, weitergegeben. Die elektronische Steuerungseinheit berechnet aus dem Druckwert ein Steuerungssignal für das Dosierventil.

Nach DE 20 2004 020 234 U1 kann ein ASIC, möglichst beabstandet von der Druckmembran eines Drucksensors, so programmiert werden, dass die Signale des Drucksensors verstärkt, kompensiert und kalibriert hinter dem ASIC zur Verfügung gestellt werden können. Gemäß US 2003 024 320 A1 kann die Kompensation und Kalibrierung idealerweise über den gesamten Messbereich durchgeführt werden. Hierbei können auch nicht lineare Kompensationsabhängigkeiten berücksichtigt werden. Dabei ist es aber immer das Ziel, möglichst einen exakten Wiedergabewert für den tatsächlich herrschenden Druckwert, wie zum Beispiel in den oben genannten Systemen, zu finden. Mechanische Systeme, zum Beispiel nach DE 600 10 776 T2, zeigen häufig nicht so weit gespannte Kompensationsmöglichkeiten. In der DE 699 10 776 T2 wird eine Verstellschraubeneinheit erklärt, die mechanisch wenigstens eine O-Punkt-Kompensation ermöglicht. Die Kompensation soll einen anfänglichen Offset ausgleichen.

Keine der benannten Lösungen abstrahiert vom Druckwert und überlegt, wofür der Druckwert eigentlich benötigt wird. Stattdessen wird das Ziel verfolgt, messtechnische, mechanische und elektronische Verfälschungen durch Kalibrierung und Kompensation auf 0 zu bringen.

Zur Eindosierung der Harnstoff-Wasser-Lösung bzw. des Harnstoff-Wasser-Aerosols in den Abgasstrom werden üblicherweise Dosiersysteme verwendet, die zumindest teilweise austauschbare Dosiermodule aufweisen. Diese Dosiersysteme werden in der Regel von der Motor- bzw. Fahrzeugelektronik (Steuergerät) in Abhängigkeit von dort in einem Kennfeld gespeicherten Stickoxidgchaltcn des Abgases und dem Motorbctricbszustand angesteuert. Beispielsweise beschreibt die DE 44 36 397 B4 eine Einrichtung zum Nachbehandeln von Abgasen mittels eines Harnstoff-Wasser-Aerosols. Diese Einrichtung umfasst unter anderem ein Dosiermodul mit einem Dosierventil für die Dosierung einer wässerigen Harnstofflösung, welche hinter dem Dosierventil über ein Steuerventil mittels Druckluft fein verteilt wird. Die DE 103 41 996 A1 beschreibt eine Abgasnachbehandlungseinrichtung für Dieselmotoren von Fahrzeugen, vorzugsweise von Personenkraftwagen. Diese Abgasnachbehandlungseinrichtung arbeitet, da bei Personenkraftwagen ein Druckluftsystem in der Regel nicht zur Verfügung steht, mit einer Harnstoff-Wasser-Lösung, welche direkt in den Abgasstrom eindosiert wird. Unter anderem umfasst diese Einrichtung ein Dosiermodul mit einem Drucksensor und einer Injektorvorrichtung in Form eines Einspritzventils mit einer Einspritzdüse, über die das Abgasnachbehandlungsmedium in den Abgasstrom gelangt.

Ein Problem des zitierten Standes der Technik wird beim Austausch eines beispielsweise defekt gewordenen Dosiermoduls gegen ein neues solches Dosiermodul erkennbar. Die einzelnen Komponenten der Dosiermodule, insbesondere deren mechanische Komponenten, wie beispielsweise die Dosierventile, die Steuerventile, die Einspritzventile, die Einspritzdüsen etc. unterliegen fertigungstechnischen Streuungen. Dies führt dazu, dass bei identischen Öffnungsgraden der Einsprilzveritile bzw. -düsen und Applikation eines bestimmten Druckes auf das Abgasnachbehandlungsmedium im Aufnahmeraum bei verschiedenen Dosiermodulen einer bestimmten Ausführungsform unterschiedliche Volumensmengen pro Zeiteinheit des Abgasnachbehandlungsmediums in den Abgasstrom gefangen. Dies kann dazu führen, dass einerseits die strengen gesetzlichen Grenzwerte für Stickoxide, beispielsweise der Euro V-Stufe, nicht eingehalten werden oder andererseits die Belastung der Umwelt durch den unerwünschten Ammoniakschlupf erhöht wird. Das Problem besteht prinzipiell bei jeder Dosiervorrichtung mit Komponenten, die fertlgungstechnischen Streuungen, d. h. Fertigungstoleranzen, unterworfen sind, und ist nicht allein auf Dosiervorrichtungen für die Reduktion von Stickoxiden beschränkt, welche hier lediglich im Besonderen angeführt sind.

Eine mögliche Lösung des Problems bestünde darin, für jedes einzelne Dosiermodul einen Kalibrierdatensatz für das Steuergerät mitzuliefern, damit die Druckausgangssignal-Volumensmenge-Charakteristik eines solchen Dnsiermoduls fehlerfrei ausgebildet werden kann. Der Nachteil einer solchen Lösung besteht in dem enormen operativen Aufwand. Denn bei jedem Austausch eines defekten Dosiermoduls müsste ein neuer, nur für das neue Dosiermodul gültiger Kalibrierdatensatz in das Steuergerät eingespeichert werden.

### Erfindungsbeschreibung

Die Fachwelt hat demgegenüber einen Bedarf an Volumensmengenabgabeeinheiten, die einfach und ohne großen Zeitaufwand ausgetauscht werden können, wobei durch einen solchen Austausch bedingte Schadstoffgehaltsschwankungen im Abgas vermieden werden müssen, Insbesondere dürfen die Schadstoffgehaltsschwankungen nach einem Austausch nur so groß sein, dass gesetzliche Emissionsgrenzwerte sicher eingehalten werden. Die Befriedigung dieses Bedarfs gelingt durch eine Volumensmengenabgabeeinheit mit den Merkmalen des Anspruchs 1 bzw. durch Verfahren wie sie in den Ansprüchen 7 und 8 definiert sind.

Vorteilhafte Weiterbildungen sind den abhängigen Ansprüchen zu entnehmen.

Wenn in dieser Schrift von einem "Abgasnachbehandlungsmedium" die Rede ist, so ist darunter eine Substanz bzw. ein Stoff zu verstehen, welche/r nach der Eindosierung in den Abgasstrom des Verbrennungsmotors bzw. einer anderen Verbrennungsanlage, beispielsweise im Zusammenwirken mit einem Katalysator, zumindest teilweise die Umwandlung mindestens eines Schadstoffes im Abgas in unschädliche Stoffe bzw. in unschädlichere Stoffe, als es die Schadstoffe sind, bewirkt. Im Falle einer SCR ist diese Umwandlung bekanntlich ein chemischer Reduktionsvorgang.

Unter einem Abgasnachbehandlungsmedium ist in dieser Schrift insbesondere eine flüssige Harnstoff-Wasser-Lösung, im Folgenden kurz HWL, zu verstehen. Beispielsweise kann eine 11-prozentige oder eine 32-prozentige HWL als Abgasnachbehandlungsmedium verwendet werden.

Insbesondere in der Automobilindustrie werden in ihrer Wirkung dem Harnstoff ähnliche Substanzen benutzt, welche zur Abgasnachbehandlung bei Stickoxiden ebenfalls geeignet sind. Jede solche Substanz stellt ebenfalls ein Abgasnachbehandlungsmedium im Sinne dieser Schrift dar.

Unter einem Schadstoff ist in dieser Schrift insbesondere ein Stickoxid (NOₓ) zu verstehen. Andere Schadstoffe, wie beispielsweise Kohlenwasserstoffe, sind jedoch nicht grundsätzlich ausgeschlossen.

Erfindungsgemäß wird messtechnisch bewusst ein verfälschter Druckwert zum Ausgleich der Fertigungstoleranzen der Bauteile, die eine Verfälschung der Volumensmenge bewirken können, benutzt und somit eine einfache Kalibrierung der Druckausgangssignal-Volumensmengen-Charakteristik einer in einer Abgasnachbehandlungseinheit verwendbaren Volumensmengenabgabeeinheit realisiert. Der Druckwert ist die Information, die in dem Abgabesignal des Drucksensors enthalten ist. Nach einer Ausgestaltung kann dem Druckwert ein Offset aufgelegt werden. Der tatsächliche, in dem Dosiermedium herrschende Druck ist für das Steuergerät nicht sichtbar-Das Steuergerät erhält lediglich ein vom tatsächlichen Druckwert mit einem zusätzlichen Wert versehenes abweichendes Druckausgangssignal als Eingangssignal. Nach einer weiteren Ausgestaltung kann die Ausgabekurve des Drucksensors verändert oder angepasst werden. Das bedeutet, mehrere Faktoren oder Kennlinien oder Multiplikatoren bzw. Parameter der aufbereiteten Messkurve in dem Drucksensor werden angepasst.

Nach einer weiteren Ausgestaltung wird zwar neben dem verfälschten Druckwert auch der tatsächliche Druckwert an das Steuergerät geliefert. Das Steuergerät arbeitet zur Dosierungsbercchnung aber mit dem verfälschten Druckwert.

Als Kalibrieren versteht man das Anpassen eines, in einigen Fallgestaltungen sogar exakteren, Messwertes an Umgebungsparameter und Steuergrößen, so dass der Messwert verfälscht und damit abweichend vom tatsächlichen, vorliegenden Wert nutzbar ist.

Die erfindungsgemäße Volumensmengenabgabeelnheit wird bevorzugter Weise insbesondere als Dosiereinheit einer wässrigen Lösung wie einer HWL eingesetzt, die in einer Abgasnachbehandlungseinheit verwendbar ist. Vorteilhafterweise ist der Druckaufnehmer der Volumensmengenabgabeeinheit durch einen elektrischen Drucksensor realisiert.

Die Volumensmengenabgabe der Volumensmengenabgabeeinheit folgt einem elektrischen Signal. Vorteilhafterweise wird dieses elektrische Signal vom Steuergerät auf Basis des Druckausgangssignals des Druckaufnehmers der Volumensmengenabgabeeinheit generiert.

Erfindungsgemäß ist zumindest ein Mittel zum Verändern eines Druckwertes vorgesehen, das den Druckwert so verändert, dass der Druckwert, der dem Druck in der Volumensmengenabgabeeinheit entsprechen soll, ein Eingangssignal für eine abzugebende Volumensmenge ist. Dadurch gelingt die Kalibrierung der Volumensmengenabgabeeinheit auf einfache Weise und der Aufwand bei deren Austausch kann klein gehalten werden, insbesondere ist vorteilhafter Weise eine aufwändige Verwaltung von Kalibrierdaten unnötig, welche sonst für jede individuelle Volumensmengenabgabeeinheit zusätzlich erforderlich wäre.

Die Mengenabgabe des Abgasnachbehandlungsmediums ist auch von der Betriebstemperatur abhängig. Der vom Drucksensor abzugebende Druckwert wird nach einer Ausgestaltung so eingestellt, dass Temperaturschwankungen durch eine mittlere Kalibrierung, eine Kalibrierung auf einen mittleren Betriebstemperaturwert und die dadurch einhergehende Abweichung der Abgabcmcngc aus der Dosiereinheit ausgeglichen werden.

Bevorzugter Weise wird die Volumensmengenabgabeeinheit als Dosiereinheit zur Reduktion von Schadstoffanteilen des Abgases bei der Abgasnachbehandlung verwendet. Besonders bevorzugt ist die Verwendung zur Reduktion von Stickoxiden, insbesondere in einem SCR-Katalysator.

Vorteilhafterweise ist durch das Mittel der Druckwert in der Volumensmengenabgabecinheit veränderbar. Besonders bevorzugt ist es, wenn das Mittel den Druckaufnehmer und eine verstellbare Blende zur Änderung des Druckwertes im Druckaufnehmer umfasst, wobei die Verstellung der Blende das Druckausgangssignal des Druckaufnehmers nicht verändert. Dadurch gelingt es, die Fertigungstoleranzen des Drucksensors ebenfalls auf eine einfache Art und Weise zusätzlich abzugleichen, wobei nach einem positiven Aspekt mechanische Blenden so gestattet sein können, dass sie eine permanente, schwer zu verändernde Einstellung gewährleisten. Die einmal gewählte Einstellung einer Blende lässt sich durch räumliche Anordnung, Versiegelung, Arretierung oder eine sonst wie geartete Weise nachträglich nur noch schwerlich veränderbar einstellen.

Die Volumensmengenabgabeeinheit arbeitet mit einem verfälschten Druckwert. Der Druckwert ist so weit verfälscht, dass Abweichungen von einer Sollmenge einer Volumensmenge an Hand des verfälschten Druckwerts kompensiert sind. Im Rahmen der Kalibrierung wird der Druckwert so lange verändert, bis die richtige Volumensmenge abgegeben wird.

Die Erfindung umfasst auch ein Verfahren zur Kalibrierung der Druckausgangssignal-Volumensmenge-Charakteristik einer in einer Abgasnachbehandlungseinheit verwendbaren. Volumensmengenabgabeeinhcit mit einem Druckaufnehmer. Dabei ist die eindosierte Volumensmenge pro Zeiteinheit durch eine an die Fertigungstoleranz der Volumensmengenabgabeeinheit angepasste Änderung eines Druckwertes der Volumensmengenabgabeeinheit auf einen vorgebbaren Wert einstellbar. Positiverweise ist dieses Verfahren auch auf die erfindungsgemäße Volumensmengenabgabeeinheit anwendbar, da diese einen Druckaufnehmer umfasst.

Eine Realisierung der Erfindung mittels einer elektronischen Schaltung ist platzsparender als eine mechanische Umsetzung. Weil der Bauraum ein wichtiges Kriterium im Automobilbau ist, dort, wo das erfindungsgemäße Dosierventil eingesetzt und verwendet wird, ist eine elektronische Realisierung mittels ASIC oder einem vergleichbaren integrierten Schaltkreis besonders annehmbar. Unter gewissen Ausgestaltungen kann es als die beste Lösung angesehen werden.

Der tatsächlich messtechnisch aufgenommene Druckwert hat also nur eine nachgeordnete Bedeutung für die Dosiereinheit. Der Druckwert soll von dem aufgenommenen, in der Dosiereinheit tatsächlich herrschenden Druck, insbesondere an der Druckmessstelle, insoweit abweichen, dass die bei einem bestimmten Druckwert gewünschte Volumensmenge in die Verfälschung des Druckwerts eingeht. Der Druckwert des Druckaufnehmers spiegelt nicht den Druckwert wieder, sondern der Druckwert entspricht einer Volumensmenge. Toleranzen, Abweichungen und Dosiereinheit spezifische Besonderheiten in Bezug auf die Volumensmenge, und nicht in Bezug auf den tatsächlichen Druckwert, werden durch den Druckwert vor, an, in oder hinter dem Druckaufnehmer kompensiert. Es können auch mehrere Eingriffe auf den Druckwert vorgenommen werden. Der Druckwert wird verfälscht, nicht korrigierend richtig gestellt.

### Figurenbeschreibung

Weitere vorteilhafte Eigenschaften und Ausbildungen der Erfindung werden anhand der im Folgenden erläuterten Zeichnung beschrieben. In dieser Zeichnung zeigt
Fig.1 ein Blockschaltbild einer von einem Steuergerät angesteuerten Abgasnachbehandlungseinheit mit einer erfindungsgemäßen Volumensmengenabgabeeinheit (schematisch);
Fig. 2: eine Ausführungsform einer erfindungsgemäßen Volumensmengenabgabeeinheit, wobei das Mittel hier sowohl den Druckaufnehmer, sowie eine verstellbare Blende und eine elektronische Schaltung umfasst, wobei letztere mit der Auswerteelektronik des als Drucksensor ausgebildeten Druckaufnehmers zusammenwirkt.

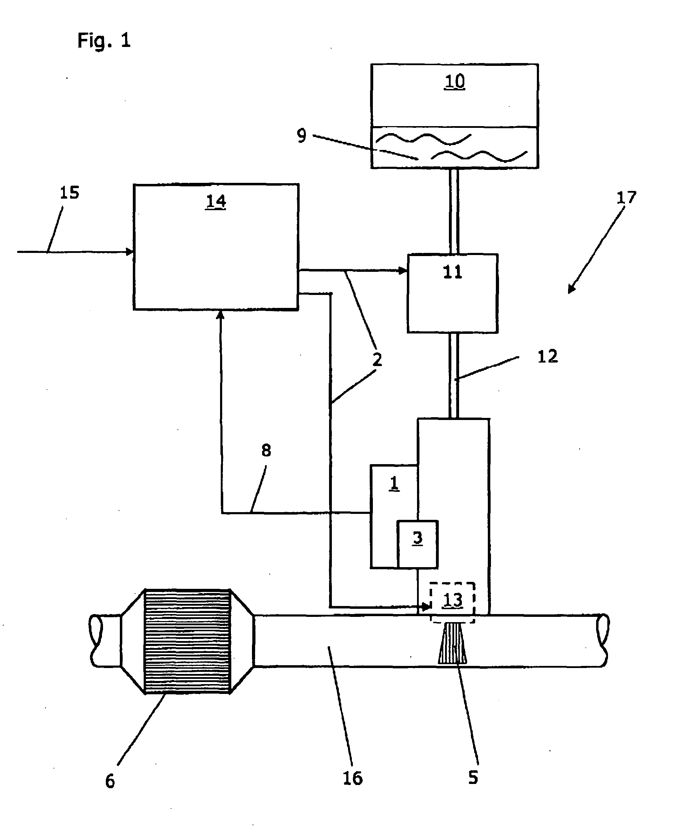

Die erfindungsgemäße Volumensmengenabgabeeinheit kann beispielsweise in einer Abgasnachbehandlungseinheit, insbesondere in einer in einem insbesondere mit einem Dieselmotor ausgestatteten Fahrzeug eingebauten Abgasnachbehandlungseirlheit als Dosiereinheit verwendet werden. Eine solche Verwendung ist im Blockschaltbild der Fig. 1 schematisch dargestellt, wobei hier lediglich die für die Erfindung wesentlichen Komponenten der Volumensmengenabgabeeinheit abgebildet sind.

Die Abgasnachbehendlungseinheit 17 wird hier von einem Steuergerät 14 mit Hilfe eines elektrischen Signals 2 angesteuert. Die Abgasnachbehandlungseinheit 17 dosiert ein Abgasnachbehandlungsmedlum 9 in den Abgasstrang 16 ein. Das Abgasnachbehandlungsmedium 9 wird an einer Stelle in den Abgasstrom eindosiert, die sich stromaufwärts vor einem SCR-Katalysator 6 befindet. In Fig. 1 ist aus Gründen der Übersichtlichkeit lediglich ein Teil des Abgasstranges 16 zusammen mit dem SCR-Katalysator 6 dargestellt.

Als Abgasnachbehandlungsmedium 9 kommt hier eine 11-prozentige HWL zum Einsatz, die in einem Vorratsbehälter 10 aufbewahrt wird. Mittels einer Pumpe 11 und einer Zuleitung 12 wird die HWL bei Bedarf - veranlasst durch das Steuergerät 14 - vom Vorratsbehälter 10 in die Volumensmengenabgabeeinheit gepumpt.

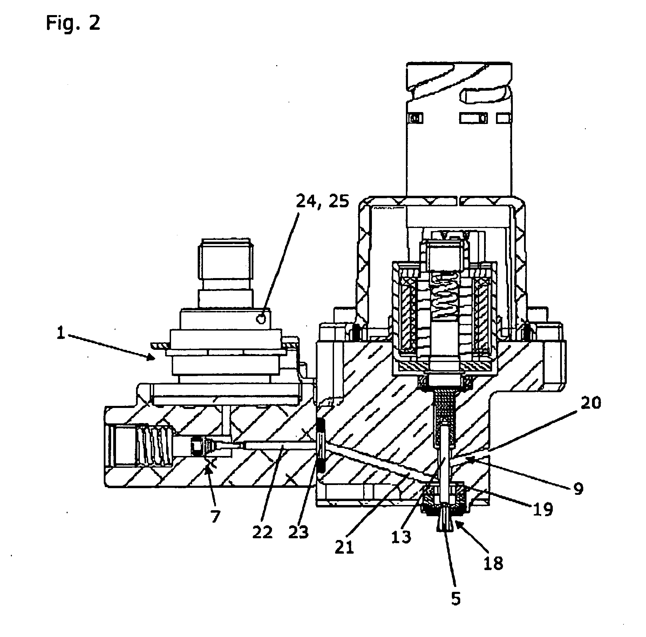

Die Volumensmengenabgabeeinheit weist hier eine elektromagnetisch betätigbare, abgasseitig an der Volumensmengenabqabeeinheit angeordnete Stößel-Kolbenschieber-Einheit 13 auf, die vom Steuergerät 14 ansteuerbar ist. Die Aufbringung der Verschiebekraft wird hier durch das Magnetfeld einer Spule bewerkstelligt. Die Spule ist in Fig. 2 der Vollständigkelt halber zwar dargestellt, da sie für die Erfindung jedoch von nachgeordneter Bedeutung ist, weist sie kein eigenes Bezugszeichen auf. Gleiches gilt für die Feder, die die Stößel-Kolbenschieber-Einheit 13 in die Geschlossen-Stellung vorspannt. Das Dosierventil ist ein (Standard-)Schließer. Das elektrische Signal 2 wird einerseits benützt bzw. es ist dazu bestimmt, die Pumpe 11 anzusteuern und damit die HWL in der Volumensmengenabgabeeinheit unter einen bestimmten Druck zu setzen, andererseits um den Öffnungsgrad der Stößel-Kolbenschieber-Einheit 13 und damit die abzugebende Volumensmenge 5 einzustellen. Mit dem Begriff Öffnungsgrad kann nach einer Ausgestaltung die Öffnungsweite des Stößels gemeint sein, nach einer Ausgestaltung bezeichnet der Begriff Öffnungsgrad die relative Öffnungszeit im Verhältnis zur Betriebszeit, auch als Austastverhältnis bekannt.

Der Druckaufnehmer 1, der hier als elektrischer Drucksensor ausgebildet ist, dient der Messung des Drucks der HWI in der Volumensmengenabgabeeinheit. Der Druckaufnehmer 1 gibt ein als Eingangssignal für das Steuergerät 14 dienendes Druckausgangssignal 8 aus. Das Steuergerät 14 ermittelt anhand dieses Eingangssignals 8 und anhand eines weiteren Eingangssignals, das den Motorbetriebszustand 15 abbildet, die abzugebende Volumensmenge 5 und gibt ein dem Ergebnis dieser Ermittlung entsprechendes elektrisches Signal 2 an die Pumpe 11 und an die Stößel-Kolbenschieber-Einheit 13 aus. Die tatsächlich abgegebene Volumensmenge 5 folgt somit dem elektrischen Signal 2.

Bei der Produktion von Volumensmengenabgabeeinheiten lassen sich Fertigungstoleranzen nicht vermeiden. Daher würde die von der Volumcnsmcngcnabgabccinhcit über die Stößel-Kolbenschieber-Einheit 13 tatsächlich abgegebene Volumensmenge von der vom Steuergerät 14 ermittelten abzugebenden Volumensmenge 5 unerwünscht abweichen, wenn nicht eine geeignete Kalibrierung an jeder Volumensmengenabgabeeinheit vorgenommen werden würde. Zur Durchführung dieser Kalibrierung ist erfindungsgemäß ein Mittel 3 zum Verändern eines Druckwertes 4 vorgesehen, das den Druckwert 4 so verändert, dass der Druckwert 4, der dem Druck in der Volumensmengenabgabeeinheit entsprechen soll, ein Eingangssignal für eine abzugebende Volumensmenge 5 ist.

Ein konkretes Ausführungsbeispiel einer erfindungsgemäßen Volumensmengenabgabeeinhelt Ist in Fig. 2 dargestellt.

Die Dosiervorrichtung umfasst hier einen als elektrischen Drucksensor ausgebildeten Druckaufnehmer 1. Drucksensoren sind in unterschiedlichen Ausführungsformen bekannt. Sie umfassen in der Regel ein Gehäuse, in dem eine Messzelle untergebracht ist. Dies ist auch bei der gezeigten Ausführungsform der Fall. Die seitliche Stichleitung 21, die aus dem Bereich der Spitze des Dosierventils als Ruheleitung wegführt, mündet in den statischen Druckraum 22 des Druckaufnehmers 1. Mit dem Drucksensor 1 der Dosiervorrichtung wird der Druck des Abgasnachbehandlungsmediums 9 gemessen. Das Abgasnachbehandlungsmedium 9 kann bei tiefen Temperaturen einfrieren. Dabei dehnt sich das Abgasnachbehandlungsmedium 9 aus, wodurch die Messzelle des Drucksensors 1 Schaden nehmen kann. Damit eine Beschädigung des Drucksensors 1 beim Einfrieren des Abgasnachbehandlungsmediums 9 vermieden wird, befindet sich im Druckraum 22 häufig ein komprimierbares Volumen bzw. Medium. In diesem herrscht ein bestimmter Druck. Wenn in dieser Schrift dieser Druck in dem komprimierbaren Volumen bzw. Medium des Druckraumes 22 gemeint ist, dann wird auch kurz von "Druck im Drucksensor" gesprochen. Das komprimierbare Volumen im Druckraum 22 ist hier mit Luft gefüllt und gegen das Abgasnachbehandlungsmedium 9 mittels einer Membran 23 abgegrenzt. Es könnte auch ein anderer geeigneter Drucksensor als der im Ausführungsbeispiel in Fig. 2 gezeigte verwendet werden. In dem Fall kann auch von einer mittelbaren Messung des Dosiermediums gesprochen werden. Eine weitere Ausgestaltung zeigt die direkte Messung des Abgasnachbeharidlungsmediums, jedoch über eine Blende 7 in ihrem absoluten Wert verstellt. An Stelle der Membran 23 kann auch ein 0-Ring vorgesehen werden, so dass das Dosierventil und der Druckaufnehmer 1 aus zwei baulich abgesetzten Komponenten bestehen, die flächig zu einer Abgasnachbehandlungseinheit 17 zu fügen sind, um den Drucksensor seitlich der Hauptströmrichtung anordnen zu können.

Im gezeigten Ausführungsbeispiel kann der Druck im komprimierbaren Volumen des Drucksensors 1 zusätzlich über eine verstellbare Blende 7 eingestellt werden. Das Mittel 3 umfasst hier den Druckaufnehmer 1 und die Blende 7.

Die Voiumensmengenabgabeeinheit weist hier weiters einen Aufnahmeraum 19 für das Abgasnachbehandlungsmedium 9 auf. Der Aufnahmeraum 19 weist hier eine Zuführöffnung 20 für das Abgasnachbehandlungsmedium 9 auf. Es könnten auch mehr als eine Zuführöffnung 20 vorhanden sein. Durch die Zuführöffnung 20 wird das Abgasnachbehandlungsmedium 9 in den Aufnahmeraum 19 eingeleitet. Der erforderliche Druck dafür wird in der Regel mit einer Pumpe 11, beispielsweise einer Membranpumpe, aufgebracht, welche das Abgasnachbehand lungsmedium 9 aus einem Vorratsbehälter 10 über eine Zuleitung 12 in den Aufnahmeraum 19 der Dosiervorrichtung pumpt. Die Pumpe 11, die Zuleitung 12 und der Vorratsbehälter 10 sind für den graphisch dargestellten Aspekt des gezeigten Ausführungsbeispiels nicht wesentlich, weshalb sie in der Zeichnung auch fortgelassen wurden. Grundsätzlich umfasst die erfindungsgemäße Volumensmengenabgabeeinheit diese Komponenten jedoch ebenfalls.

Der Aufnahmeraum 19 mündet im Ausführungsbeispiel in eine Feinzerstäuberdüse 18, welche von der Stößel-Koibenschieber-Einheit 13 verschließ- und öffenbar ist. Die Vorrichtung" bestehend aus der Feinzerstäuberdüse 18 und der Stößel-Kolbenschieber-Einheit 13, kann somit, je nach Verschiebestellung der Stößel-Kolbenschieber-Einheit 13 relativ zur Feinzerstäuberdüse 18, unterschiedliche Öffnungsgrade aufweisen. Es könnte auch mehr als eine Feinzerstäuberdüse 18 vorhanden sein. Genauso sind Ausgestaltungen einer Volumensmengenabgabeeinheit bekannt, die an ihrem Ende ohne jegliche Feinzerstäuberdüse gestaltet sind, weil der Abgasstrang so konzipiert ist, dass eine möglichst gute Zerstäubung überflüssig ist.

Die Volumensmengenabgabeeinheit dient zur Eindosierung des Abgasnachbehandlungsmediums 9 durch die mindestens eine Feinzerstäuberdüse 18 hindurch in den Abgasstrom eines Verbrennungsmotors, beispielsweise eines Dieselmotors, hinein.

Das Abgasnachbehandlungsmedium 9 ist im Aufnahmeraum 19 über die Zuführöffnung 20 unter einen bestimmten Druck setzbar. Wie oben beschrieben, kann dies beispielsweise mittels einer Pumpe 11 geschehen. Die Ansteuerung dieser Pumpe 11 berücksichtigt in der Regel das Druckausgangssignal 8 des Drucksensors 1. Weiters wird das Druckausgangssignal 8 zur Steuerung bzw. Regelung des Öffnungsgrades der Stößel-Kolbenschieber-Einheit 13 und der Feinzerstäuberdüse 18 verwendet

Die Eindosierung des Abgasnachbehandlungsmediums 9 dient zur Reduktion von Schadstoffanteilen des Abgases bei der Abgasnachbehandlung, insbesondere in einem SCR-Katalysator 6.

Erfindurigsgemäß ist die einzudosierende Volumensmenge 5 des Abgasnachbehandlungsmediums 9 durch das Mittel 3 einstellbar. Das Mittel 3 macht den Druckwert 4, also beispielsweise das Druckausgangssignal 8 des Drucksensors 1 und/oder den Druck im Drucksensor 1, veränderbar. Die Veränderung muss vom Fachmann so eingestellt werden, dass bei einem bestimmten Druck des Abgasnachbehandlungsmedlums 9 und einem vorgebbaren Öffnungsgrad von Stößel-Kolbenschieber-Einheit 13 und Feinzerstäuberdüse 18 eine bestimmte vorgebbare Volumensmenge 5 pro Zeiteinheit (=Volumenstrom) des Abgasnachbehandlungsmediums 9 eindosiert wird. Das Verändern des Druckwertes 4 durch das Mittel 3 bewirkt somit eine Kalibrierung der Volumensmengenabgabeeinheit, durch welche eine Verfälschung der Druckausgangssignal-Volumensmenge-Charakteristik der Volumensmengenabgabeeinheit, welche durch Fertigungstoleranzen der Volumensmengenabgabeeinheit verursacht ist, korrigiert wird.

Die in Fig. 2 dargestellte Volumensmengenabgabeeinheit ist beispielsweise auf die Eindosierung von fünf Liter HWL pro Stunde bei neun bar Druck der HWL kalibriert. Der Druck des Abgasnachbehandlungsmediums 9, hier der HWL, könnte auch im Bereich von etwa sieben bis etwa zehn bar liegen. Auch für die einzudosierende Volumensmenge 5 pro Zeiteinheit könnte ein anderer Wert als fünf Liter pro Stunde vorgegeben sein, beispielsweise 4,5 oder 5,5 Liter pro Stunde.

Der Drucksensor 1 weist im Ausführungsbeispiel eine verstellbare Blende 7 zur Änderung des Druckes im Drucksensor 1 auf. Was unter "Druck im Drucksensor" zu verstehen ist, wurde weiter oben bereits beschrieben. Die Verstellung der Blende 7 verändert das Druckausgangssignal 8 des Drucksensors 1 nicht.

Das Mittel 3 umfasst bevorzugter Weise eine elektrische bzw. elektronische Schaltung 24. Diese Schaltung 24 umfasst im Ausführungsbeispiel ein Potentiometer 25 und ein ASIC. Das ASIC ist in der Zeichnung nicht dargestellt, da es in die Auswerteelektronik des Drucksensors 1 integriert ist. Lediglich der Betätigungsteil des Potentiometers 25 ist zur Veränderung des Druckwertes 4 aus dem Gehäuse des Drucksensors 1 herausgeführt. Die Schaltung 24 könnte auch anders bei spielsweise durch eine Operationsverstärkerschaltung realisiert sein. Das Mittel 3 könnte auch nur aus dieser elektrischen bzw. elektronischen Schaltung 24 alleine bestehen.

Der Drucksensor 1 des Ausführungsbeispiels weist eine (in der Zeichnung nicht dargestellte) Auswerteelektronik auf. Die Schaltung 24 ist in diese Auswerteelektronik eingebaut. Der Einbau einer elektrischen bzw. elektronischen Schaltung 24 kann auch nachträglich erfolgen.

Das Abgasnachbehandlungsmedium 9 ist hier flüssig. Es handelt sich, wie erwähnt, um eine 11-prozentige HWL (Volumensprozente). Die HWL könnte auch eine andere Konzentration an Harnstoff enthalten, beispielsweise 32,5 Volumensprozente. Das Abgasnachbehandlungsmedium 9 könnte auch in einem anderen Zustand vorliegen, beispielsweise könnte es als Aerosol vorliegen.

Der Drucksensor 1 ist so platziert, dass der Drucksensor einen vorrangig statischen Druck des vor ihm ruhenden Mediums misst, während die Hauptströmrichtung durch das Dosierventil entfernt von dem Drucksensor vorbei läuft. Die Hauptströmrichtung ist nicht unmittelbar vor dem Drucksensor, die Hauptströmrichtung ist beabstandet. Der Drucksensor misst zwar, nach einer erfindungsgemäßen Ausgestaltung, unmittelbar den Druck des Abgasnachbehandlungsmediums, er misst aber nur mittelbar zur Hauptstromrichtung. Der Drucksensor misst daher sozusagen in einer Stichleitung oder einer Ruheleitung, die als Sackleitung ausgestaltet sein kann.

Die Erfindung umfasst auch ein Verfahren zur Kalibrierung der Druckausgangssignal-Vnlumensmenge-Charakteristik einer in einer Abgasnachbehandlungseinheit 17 verwendbaren Volumensmengenabgabeeinheit mit einem Druckaufnehmer 1. Dabei ist die eindosierte Volumensmenge pro Zeiteinheit durch eine an die Fertigungstoleranz der Volumensmengenabgabeeinheit angepasste Änderung eines Druckwertes 4 der Volumensmengenabgabeeinheit auf einen vorgebbaren Wert einstellbar.

Dieses Verfahren kann auch auf die erfindungsgemäße Volumensmengenabgabeeinheit angewendet werden. Dabei bewirkt die Veränderung des Druckwertes 4 durch das Mittel 3 eine Kalibrierung des Druckausgangssignals 8 des Druckaufnehmers 1 im Bezug auf die abzugebende Volumensmenge 5 pro Zeiteinheit.

Es ist bevorzugt das erfindungsgemäße Verfahren bei der Endprüfung der Volumensmengenabgabeeinheit, d. h. vor der Auslieferung, vorzunehmen.

Weiters ist es denkbar und möglich, dass durch das Mittel 3 der Druckwert 4 in der Zuleitung 12 zur Volumensmengenabgabeeinheit veränderbar ist. Insbesondere könnte in einem solchen Fall das Mittel 3 eine Schraube zum Verengen der Zuleitung 12 zur Volumensmengenabgabeeinheit umfassen.

Zwar ist nur eine bestimmte Ausführungsform näher beschrieben worden. Es versteht aber jeder Fachmann, dass die Veränderung des Drucksensorsignals, vorzugsweise eines elektrischen Strom- oder Spannungssignals, in einer Art, dass hierdurch nicht mehr der tatsächliche, innere Druckwert innerhalb der Dosiereinheit ansteht, geschieht, in der mit dem dann tatsächlich an ein Steuergerät abzugebenden Druckwert die erwünschte oder erwartete Dosiermenge bzw. Volumensdurchflussmenge des Abgasnachbehandlungsmediums kompensiert, kalibriert oder verändert wird. Hierbei kann zwischen dem Druckwert und der Ansteuerung des Dosierventils einer Abgasnachbehandlungseinheit ein geeignetes Steuergerät, das weitere Werte in Bezug auf den Betriebszustand des Motors berechnet und aufnimmt, zur elektrischen Signalweitergabe dazwischen geschaltet sein.

### Liste der Bezugszeichen:

| | | | |
|---|---|---|---|
| 1 | Druckaufnehmer | 13 | Stößel-Kolbenschieber-Einheit |
| 2 | elektrisches Signal | 14 | Steuergerät |
| 3 | Mittel | 15 | Motorbetriebszustand |
| 4 | Druckwert | 16 | Abgasstrang |
| 5 | Volumensmenge | 17 | Abgasnachbehandlungseinheit |
| 6 | SCR-Katalysator | 18 | Feinzerstäuberdüse |
| 7 | Blende | 19 | Aufnahmeraum |
| 8 | Druckausgangssignal | 20 | Zuführöffnung |
| 9 | Abgasnachbehandlungsmedium | 21 | Stich leitung |
| 10 | Vorratsbehälter | 22 | Druckraum |
| 11 | Pumpe | 23 | Membran |
| 12 | Zuleitung | 24 | elektrische bzw. elektronische Schaltung |
| | | 25 | Potentiometer |

## Patentansprüche

1. Volumensmengenabgabeeinheit, insbesondere als Dosiereinheit einer wässrigen Lösung wie einer Harnstoffwasserlösung, die in einer Abgasnachbehandlungseinheit (17) verwendbar ist, mit einem Druckaufnehmer (1), insbesondere mit einem elektrischen Drucksensor, wobei die Volumensmengenabgabe der Volumensmengenabgabeeinheit einem elektrischen Signal (2) folgt und die Volumensmengenabgabeeinheit kalibriert ist,
**dadurch gekennzeichnet, dass**
die Volumensmengenabgabeeinheit mindestens eine Feinzerstäuberdüse (18) zur Eindosierung der wässerigen Lösung in den Abgasstrom eines Verbrennungsmotors aufweist, welche von einer Stössel-Kolbenschieber-Einheit (13) in unterschiedlichen Austastverhältnissen verschliess- und öffenbar ist, und
zumindest ein Mittel (3) zum Verändern eines Druckwertes (4) vorgesehen ist, das den Druckwert (4) so verändert, dass der Druckwert (4), der dem Druck in der Volumensmengenabgabeeinheit entsprechen soll, ein Eingangssignal für eine abzugebende Volumensmenge (5) ist.

2. Volumensmengenabgabeeinheit nach Anspruch 1,
**dadurch gekennzeichnet, dass**
das Mittel (3) den Druckaufnehmer (1) und eine verstellbare Blende (7) zur Änderung des Druckwertes (4) im Druckaufnehmer (1) umfasst, wobei die Verstellung der Blende (7) das Druckausgangssignal (8) des Druckaufnehmers (1) nicht verändert.

3. Volumensmengenabgabeeinheit nach einem der vorstehenden Ansprüche,
**dadurch gekennzeichnet, dass**
durch das Mittel (3) der Druckwert (4) in einer Zuleitung (12) zur Votumensmengenabgabeeinheit veränderbar ist, insbesondere dass das Mittel (3) eine Schraube zum Verengen der Zuleitung (12) zur Volumensmengenabgabeeinheit umfasst.

4. Volumensmengenabgabeeinheit nach einem der vorstehenden Ansprüche,
**dadurch gekennzeichnet, dass**
durch das Mittel (3) der Druckwert (4) des Druckaufnehmers (1) und somit das Druckausgangssignal (8) des Druckaufnehmers (1) veränderbar ist, insbesondere dass das Mittel (3) eine elektrische bzw. elektronische Schaltung (24) wie ein Potentiometer oder ein ASIC umfasst.

5. Volumensmengenabgabeeinheit nach einem der vorstehenden Ansprüche,
**dadurch gekennzeichnet, dass**
das Verändern des Druckwertes (4) durch das Mittel (3) eine Kalibrierung der Volumensmengenabgabeeinheit bewirkt, durch welche eine Verfälschung der Druckausgangssignal-Volumensmenge-Charakteristik der Volumensmengenabgabeeinheit, welche durch Fertigungstoleranzen der Volumensmengenabgabeeinheit verursacht ist, korrigiert wird.

6. Volumensmengenabgabeeinheit nach einem der vorhergehenden Ansprüche,
**dadurch gekennzeichnet, dass**
der Druckwert (4) so weit verfälscht ist, dass Abweichungen von einer Sollmenge einer Volumensmenge (5) an Hand des verfälschten Druckwerts (4) kompensiert sind.

7. Verfahren zur Kalibrierung der Druckausgangssignal-Volumensmenge-Charakteristik einer in einer Abgasnachbehandlungseinheit (17) verwendbaren Volumensmengenabgabeeinheit mit einem Druckaufnehmer (1) und mindestens einer Feinzerstäuberdüse (18) zur Eindosierung der wässerigen Lösung in den Abgasstrom eines Verbrennungsmotors, welche von einer Stössel-Kolbenschieber-Einheit (13) in unterschiedlichen Austastverhältnissen verschliess- und öffenbar ist, wobei die eindosierte Volumensmenge (5) pro Zeiteinheit durch eine an die Fertigungstoleranz der Volumensmengenabgabeeinheit angepasste Änderung eines Druckwertes (4) der Votumensmengenabgabeeinheit auf einen vorgebbaren Wert einstellbar ist.

8. Verfahren nach Anspruch 7, wobei die Volumensmengenabgabeeinheit eine solche nach einem der Ansprüche 1 bis 6 ist und wobei die Veränderung des Druckwertes (4) durch das Mittel (3) eine Kalibrierung des Druckausgangssignals (8) des Druckaufnehmers (1) im Bezug auf die abzugebende Volumensmenge (5) pro Zeiteinheit bewirkt.

## Claims

1. Volume quantity delivery unit, in particular as a unit for apportioning an aqueous solution such as a solution of urea in water, said unit being usable in an exhaust treatment unit (17), with a pressure pickup (1), in particular with an electrical pressure sensor, the volume quantity delivery of the volume quantity delivery unit following an electrical signal (2), and the volume quantity delivery unit being calibrated,
**characterized in that**
the volume quantity delivery unit has at least one fine atomising nozzle (18) for apportioning the aqueous solution into the exhaust gas flow of a combustion engine, and said nozzle can be closed and opened by a plunger slide valve unit (13) in different blanking ratios, and
at least one means (3) for changing a pressure value (4) is provided, and changes the pressure value (4) so that the pressure value (4), which is intended to correspond to the pressure in the volume quantity delivery unit, is an input signal for a volume quantity (5) to be delivered.

2. Volume quantity delivery unit according to Claim 1,
**characterized in that**
the means (3) include the pressure pickup (1) and an adjustable screen (7) to change the pressure value (4) in the pressure pickup (1), the adjustment of the screen (7) not changing the pressure output signal (8) of the pressure pickup (1).

3. Volume quantity delivery unit according to any one of the preceding claims,
**characterized in that**
by the means (3), the pressure value (4) in a feed pipe (12) to the volume quantity delivery unit can be changed, in particular that the means (3) is a bolt to constrict the feed line (12) to the volume quantity delivery unit.

4. Volume quantity delivery unit according to any one of the preceding claims,
**characterized in that**
by the means (3), the pressure value (4) of the pressure pickup (1) and thus the pressure output signal (8) of the pressure pickup (1) can be changed, in particular that the means (3) includes an electrical or electronic circuit (24) such as a potentiometer or ASIC.

5. Volume quantity delivery unit according to any one of the preceding claims,
**characterized in that**
changing the pressure value (4) by the means (3) causes calibration of the volume quantity delivery unit, and by said calibration, falsification of the pressure output signal volume quantity characteristic of the volume quantity delivery unit, caused by production tolerances of the volume quantity delivery unit, is corrected.

6. Volume quantity delivery unit according to any one of the preceding claims,
**characterized in that**
the pressure value (4) is falsified to the extent that differences from a setpoint quantity of a volume quantity (5) are compensated for on the basis of the falsified pressure value (4).

7. Method of calibrating the pressure output signal volume quantity characteristic of a volume quantity delivery unit which can be used in an exhaust treatment unit (17), with a pressure pickup (1) and at least one fine atomising nozzle (18) for apportioning the aqueous solution into the exhaust gas flow of a combustion engine, it being possible to close and open said nozzle by a plunger slide valve unit (13) in different blanking ratios, and it being possible to set the apportioned volume quantity (5) per time unit to a value which can be preset, by a change of a pressure value (4) of the volume quantity delivery unit, said change being adapted to the production tolerance of the volume quantity delivery unit.

8. Method according to Claim 7, the volume quantity delivery unit being one according to any one of Claims 1 to 6, and the change of the pressure value (4) by the means (3) causing a calibration of the pressure output signal (8) of the pressure pickup (1) in reference to the volume quantity (5) to be delivered per time unit.

## Revendications

1. Unité d'émission de quantité volumique, notamment sous la forme d'une unité de dosage de solution aqueuse telle qu'une solution aqueuse d'urée, pouvant être utilisée dans une unité de post-traitement des gaz d'échappement (17), avec un capteur de pression (1), notamment un capteur électrique de pression, l'émission de quantité volumique de l'unité d'émission de quantité volumique suivant un signal électrique (2) et l'unité d'émission de quantité volumique étant étalonnée,
**caractérisée en ce que** l'unité d'émission de quantité volumique comporte au moins une buse de pulvérisation de petit diamètre (18) pour doser la solution aqueuse dans le flux de gaz d'échappement d'un moteur à combustion, celle-ci pouvant être ouverte et fermée par une unité poussoir-tiroir à piston (13) selon différents rapports d'enfoncement ; et
**en ce qu'**au moins un moyen (3) de modifier une valeur de pression (4) est prévu, ledit moyen faisant varier de telle sorte la valeur de pression (4) que la valeur de pression (4) devant correspondre à la pression régnant dans l'unité d'émission de quantité volumique est un signal d'entrée pour une quantité volumique (5) devant être émise.

2. Unité d'émission de quantité volumique selon la revendication 1,
**caractérisée en ce que** le moyen (3) comprend le capteur de pression (1) et un cache (7) réglable permettant de faire varier la valeur de pression (4) dans le capteur de pression (1), le réglage du cache (7) ne faisant pas varier le signal de sortie de pression (8) du capteur de pression (1).

3. Unité d'émission de quantité volumique selon l'une quelconque des revendications précédentes,
**caractérisée en ce que** le moyen (3) permet de modifier la valeur de pression (4) dans une conduite d'amenée (12) conduisant à l'unité d'émission de quantité volumique, notamment que le moyen (3) comprend une vis permettant de rétrécir la conduite d'amenée (12) conduisant à l'unité d'émission de quantité volumique.

4. Unité d'émission de quantité volumique selon l'une quelconque des revendications précédentes,
**caractérisée en ce que** le moyen (3) permet de modifier la valeur de pression (4) du capteur de pression (1) et ainsi le signal de sortie de pression (8) du capteur de pression (1), notamment **en ce que** le moyen (3) comprend un circuit électrique et/ou électronique (24) ainsi qu'un potentiomètre ou un circuit intégré ASIC.

5. Unité d'émission de quantité volumique selon l'une quelconque des revendications précédentes,
**caractérisée en ce que** la modification de la valeur de pression (4) à l'aide du moyen (3) a pour effet un étalonnage de l'unité d'émission de quantité volumique permettant de corriger une falsification de la caractéristique quantité volumique - signal de sortie de pression de l'unité d'émission de quantité volumique provoquée par les tolérances de fabrication de l'unité d'émission de quantité volumique.

6. Unité d'émission de quantité volumique selon l'une quelconque des revendications précédentes,
**caractérisée en ce que** la valeur de pression (4) est faussée dans une telle mesure que les écarts par rapport à une quantité théorique d'une quantité volumique (5) donnée est compensée par la valeur de pression (4) faussée.

7. Procédé d'étalonnage de la caractéristique quantité volumique - signal de sortie de pression d'une unité d'émission de quantité volumique pouvant être utilisée dans une unité de post-traitement des gaz d'échappement (17) dotée d'un capteur de pression (1) et d'au moins une buse de pulvérisation de petit diamètre (18) pour doser la solution aqueuse dans le flux de gaz d'échappement d'un moteur à combustion, celle-ci pouvant être ouverte et fermée suivant différents rapports d'enfoncement par une unité poussoir-tiroir à piston (13), la quantité volumique (5) dosée par unité de temps pouvant être réglée en faisant varier, de façon adaptée à la tolérance de fabrication de l'unité d'émission de quantité volumique, une valeur de pression (4) de l'unité d'émission de quantité volumique pour l'amener à une valeur prédéfinie.

8. Procédé selon la revendication 7,
l'unité d'émission de quantité volumique correspondant à l'une quelconque des revendications 1 à 6 et la variation de la valeur de pression (4) à l'aide du moyen (3) ayant pour effet un étalonnage du signal de sortie de pression (8) du capteur de pression (1) par rapport à la quantité volumique (5) à émettre par unité de temps.
